# EUROPÄISCHE PATENTSCHRIFT

(11) **EP 2 376 764 B1**
(45) Veröffentlichungstag und Bekanntmachung des Hinweises auf die Patenterteilung: **07.11.2012**
(21) Anmeldenummer: 09799107.9
(22) Anmeldetag: 23.12.2009
(51) Int. Cl.: F02M 37/22, B01D 36/00

(54) **KRAFTSTOFFFILTER MIT WASSERAUSTRAGSROHR**
FUEL FILTER HAVING WATER DISCHARGE PIPE
FILTRE À CARBURANT AVEC TUBE D'ÉVACUATION DE L'EAU

(30) Priorität: 12.01.2009 DE 202009000429 U
(43) Veröffentlichungstag der Anmeldung: 19.10.2011
(73) Patentinhaber: Mann + Hummel GmbH, 71638 Ludwigsburg (DE)
(72) Erfinder: REYINGER, Jochen, 71336 Waiblingen (DE); WEINDORF, Martin, 70806 Kornwestheim (DE); BRALL, Sven, 66111 Saarbrücken (DE)
(86) Internationale Anmeldenummer: PCT/EP2009/067822
(87) Internationale Veröffentlichungsnummer: WO 2010/079097

(56) Entgegenhaltungen:
- EP-A1- 0 777 046
- EP-A1- 0 806 564
- DE-A1-102006 051 406
- GB-A- 2 120 568

## Beschreibung

### Technisches Gebiet

Die Erfindung betrifft einen Kraftstofffilter, umfassend: ein Filtergehäuse mit einem Deckel und einem Gehäusetopf, einem in dem Gehäusetopf angeordneten Filterelement, einem in einem Bodenbereich zwischen dem Filterelement und dem Gehäusetopf gebildeten Wassersammelraum, sowie einem vom Wassersammelraum abgehenden Führungsrohr, in dem ein Wasseraustragsrohr angeordnet ist, durch welches das in dem Wassersammelraum enthaltene Wasser zur Oberseite des Filtergehäuses austragbar ist.

### Stand der Technik

Aus der DE 10 2006 051 406 A1 der Anmelderin ist ein Kraftstofffilter wie oben beschrieben bekannt geworden, bei dem der Deckel als mit dem Gehäusetopf verschraubter Gehäusekopf ausgebildet ist. Das Führungsrohr endet in dem Gehäusekopf an einem Dichtungsstopfen, welcher das Innere des Führungsrohrs vom umgebenden Reinbereich trennt. Falls der Dichtungsstopfen den Reinbereich nicht vollständig abdichtet, kann ggf. ungereinigtes Wasser/Kraftstoffgemisch aus dem Führungsrohr in den umgebenden Reinbereich gelangen.

Aufgabe der Erfindung ist es daher, einen Kraftstofffilter zu schaffen, bei dem der Wasseraustrag zur Oberseite des Filtergehäuses erfolgen und kein Wasser in den Reinbereich des Kraftstofffilters gelangen kann.

### Offenbarung der Erfindung

Diese Aufgabe wird gelöst durch einen Kraftstofffilter der eingangs genannten Art, bei dem das Führungsrohr über den Deckel des Filtergehäuses hinausragt. Auf diese Weise kann das in dem Wasseraustragsrohr geführte Wasser in dem Führungsrohr aus dem Filtergehäuse heraus geführt werden, ohne mit dem Reinbereich des Kraftstofffilters in Kontakt zu kommen.

In einer vorteilhaften Ausgestaltung weist der Deckel eine Auslassöffnung für den gereinigten Kraftstoff auf und das Führungsrohr erstreckt sich in axialer Richtung durch die Auslassöffnung hindurch. Die in der Regel ringförmige Auslassöffnung ermöglicht den Abtransport des gereinigten Kraftstoffs. Der Wasseraustrag kann hierbei mittels des Austragsrohrs von der Auslassöffnung beabstandet erfolgen.

Der Kraftstofffilter umfasst bevorzugt ein Gewinde im Bereich des Deckels zum Verbinden des Filtergehäuses mit einem Filterkopf. Das Filtergehäuse mit dem Führungsrohr ist hierbei als Wechselfilter ausgebildet. Das Gewinde kann an dem Führungsrohr im über den Deckel hinausragenden Bereich gebildet sein oder das Filtergehäuse selbst kann an seinem Deckel ein Gewinde aufweisen; insbesondere kann auch die Auslassöffnung mit einem Gewinde versehen sein.

In einer vorteilhaften Ausführung weist das Führungsrohr im über den Deckel hinausragenden Bereich mantelseitig mindestens eine Austragsöffnung zum Austrag des Wassers auf. Der Wasseraustrag aus dem Wasseraustragsrohr kann in diesem Fall durch die Mantelfläche des Führungsrohrs erfolgen.

Zwischen dem Führungsrohr und dem Filterelement ist bevorzugt eine Dichtung zur Abdichtung des Wassersammelraums vorgesehen. Mit Hilfe der Dichtung kann der Wassersammelraum gegenüber einer Reinseite, die sich oberhalb des Wassersammelraumes befindet, abgedichtet werden.

Bei einer vorteilhaften Ausführung ist in dem Kraftstofffilter ein Wassersensor vorgesehen. Der Wassersensor ist im Bodenbereich des Filtertopfs angeordnet und dient der Erkennung der Wassermenge in dem Wassersammelraum; seine elektrischen Verbindungsleitungen können durch das Führungsrohr verlaufen. Wird der Wassersensor mit einer Steuereinheit verbunden, welche mit einem Ventil oder einer Wasserpumpe in Verbindung steht, kann der Wasseraustrag aus dem Wassersammelraum gesteuert erfolgen.

In einer bevorzugten Ausführung umfasst der Kraftstofffilter einen Filterkopf, der an dem Deckel mit dem Filtergehäuse verbindbar ist. Das Filtergehäuse mit dem Führungsrohr kann hierbei insbesondere mit dem Filterkopf verschraubt werden.

Bevorzugt weist der Filterkopf eine axiale rohrförmige Aufnahme für das Führungsrohr auf. Das Führungsrohr wird beim Verbinden des Filterkopfs mit dem Filtergehäuse in die Aufnahme eingesteckt und von dieser geführt. Um das durch die Austragsöffnung austretende Wasser abzuführen, kann an der Mantelfläche der Aufnahme in Höhe der Austragsöffnung ein quer zur Aufnahme verlaufendes Rohr vorgesehen sein.

### Kurze Beschreibung der Zeichnungen

Weitere Einzelheiten der Erfindung werden nachfolgend anhand des Ausführungsbeispiels beschrieben.

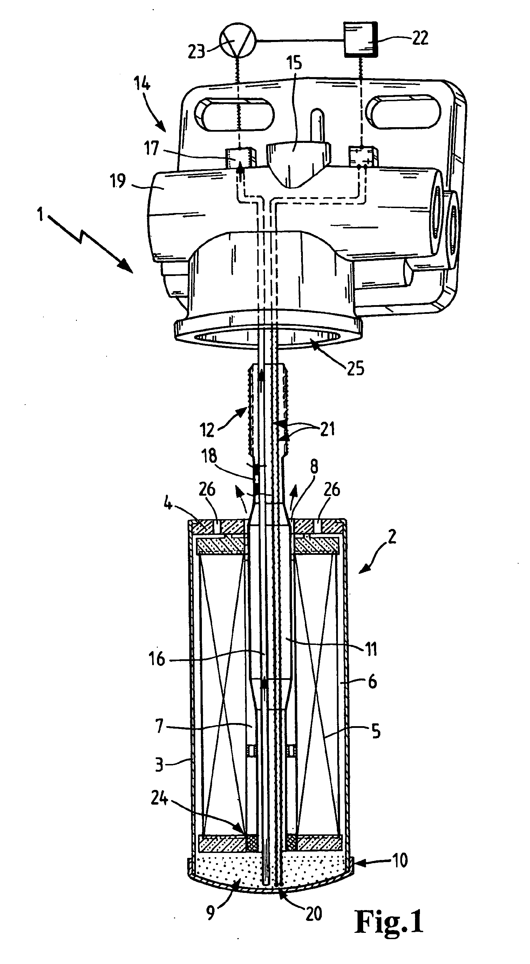

Figur 1 zeigt die Explosionsansicht eines an einem Filterkopf montierten Kraftstofffilters. Die Verbindung des Kraftstofffilters mit dem Filterkopf ist dabei schematisch dargestellt.

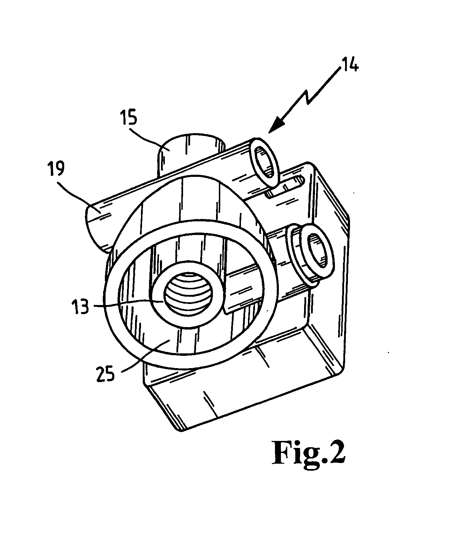

Figur 2 zeigt in einer anderen Perspektive den zur Aufnahme des Kraftstofffilters geeigneten Filterkopf.

### Ausführungsform(en) der Erfindung

Der Kraftstofffilter 1 verfügt über ein Filtergehäuse 2 mit einem Gehäusetopf 3 und einem Deckel 4. In dem Gehäusetopf 3 ist ein hohlzylindrisch ausgebildetes Filterelement 5 angeordnet, welches eine zwischen Gehäusetopf 3 und Filterelement 5 gebildete Rohseite 6 des Kraftstofffilters 1 von einer radial innen liegenden Reinseite 7 trennt. Der Deckel 4 verfügt über eine zentral angeordnete Auslassöffnung 8, die mit der Reinseite 7 korrespondiert. Der Deckel 4 weist weiterhin mehrere verteilt angeordnete Einlassöffnungen 26 auf, durch die der zu reinigende Kraftstoff an der Rohseite 6 in das Filtergehäuse 2 einströmen kann.

Bei der Reinigung des Kraftstoffs wird im Kraftstoff enthaltenes Wasser durch das Filterelement 5 daran gehindert, von der Rohseite 6 zur Reinseite 7 zu gelangen. Da das Wasser eine höhere Dichte als der Kraftstoff besitzt, sinkt das Wasser in einen Wassersammelraum 9 im Bodenbereich 10 des Gehäusetopfs 3. Von dem Wassersammelraum 9 geht ein Führungsrohr 11 ab, welches über den Deckel 4 des Filtergehäuses 2 hinausragt. Das Führungsrohr 11 weist weiterhin ein Gewinde 12 auf, mit dem das Filtergehäuse 2 an einem Flansch 13 eines Filterkopfs 14 angeschraubt werden kann. Das Führungsrohr 11 wird hierbei in einem axial verlaufenden Rohr 15 des Filterkopfs 14 aufgenommen.

In dem Führungsrohr 11 ist ein Wasseraustragsrohr 16 axial geführt, welches den Wassersammelraum 9 mit einem Wasserauslass 17 des Filterkopfs 14 verbindet. Um den Austrag des Wassers zum Wasserauslass 17 zu ermöglichen, ist in dem Führungsrohr 11 im über den Deckel 4 hinausragenden Bereich eine Austragöffnung 18 angebracht, die sich im verschraubten Zustand des Kraftstofffilters 1 auf der Höhe eines weiteren Rohres 19 des Filterkopfs 14 befindet, das rechtwinklig zum axial verlaufenden Rohr 15 verläuft und mit diesem verbunden ist.

In dem Wassersammelraum 9 ist ferner ein Wassersensor 20 zur Bestimmung der Füllhöhe des Wassers angeordnet. Der Wassersensor 20 weist elektrische Verbindungsleitungen 21 auf, die ebenfalls in dem Führungsrohr 11 axial geführt sind und die über den Filterkopf 14 mit einer Steuereinrichtung 22 verbunden sind. Die Steuereinrichtung 22 dient zur Ansteuerung einer Wasserpumpe 23, welche mit dem Auslass 17 in Verbindung steht, um einen gesteuerten Wasseraustrag aus dem Wassersammelraum 9 zu bewirken.

Um den Wassersammelraum 9 von der Reinseite 7 abzudichten, ist zwischen dem rohrzylindrischen Filterelement 5 und dem Führungsrohr 11 eine Dichtung 24 in Form eines O-Rings angebracht. Der Austritt des gereinigten Kraftstoffs durch die Austrittsöffnung 8 an der Reinseite 7 erfolgt ebenfalls über den Filterkopf 14, und zwar über einen das in axialer Richtung verlaufende Rohr 15 umgebenden Ringraum 25. Der Wasseraustrag und der Austritt des gereinigten Kraftstoffs erfolgen somit an zwei getrennten Stellen, so dass kein Wasser in den Reinbereich des Kraftstofffilters 1 gelangen kann. Es versteht sich, dass alternativ zum oben beschriebenen mantelseitigen Austrag des Wassers am Führungsrohr 11 der Austrag auch am oberen Ende des Wasseraustragrohrs 16 erfolgen kann.

## Patentansprüche

1. Kraftstofffilter (1), insbesondere für Brennkraftmaschinen von Fahrzeugen, umfassend:
ein Filtergehäuse (2) mit einem Deckel (4) und einem Gehäusetopf (3),
einem in dem Gehäusetopf (3) angeordneten Filterelement (5) mit einem in einem Bodenbereich (10) zwischen dem Filterelement (5) und dem Gehäusetopf (3) gebildeten Wassersammelraum (9), sowie einem vom Wassersammelraum (9) abgehenden Führungsrohr (11), in dem ein Wasseraustragsrohr (16) angeordnet ist, durch welches das in dem Wassersammelraum (9) enthaltene Wasser zur Oberseite des Filtergehäuses (2) austragbar ist,
**dadurch gekennzeichnet,**
**dass** das Führungsrohr (11) über den Deckel (4) des Filtergehäuses (2) hinausragt.

2. Kraftstofffilter nach Anspruch 1, bei dem der Deckel (4) eine Auslassöffnung (8) für die gereinigte Flüssigkeit aufweist und das Führungsrohr (11) sich in axialer Richtung durch die Auslassöffnung (8) hindurch erstreckt.

3. Kraftstofffilter nach Anspruch 1 oder 2, weiter umfassend ein Befestigungsmittel (12), insbesondere ein Gewinde oder ein Bajonettverschluss, im Bereich des Deckels (4) zum Verbinden des Filtergehäuses (2) mit einem Filterkopf (14).

4. Kraftstofffilter nach einem der vorhergehenden Ansprüche, bei dem das Führungsrohr (11) im über den Deckel (4) hinausragenden Bereich mantelseitig mindestens eine Austragsöffnung (18) zum Austrag des Wassers aufweist.

5. Kraftstofffilter nach einem der vorhergehenden Ansprüche, bei dem zwischen dem Führungsrohr (11) und dem Filterelement (5) eine Dichtung (24) zur Abdichtung des Wassersammelraums (9) vorgesehen ist.

6. Kraftstofffilter nach einem der vorhergehenden Ansprüche, weiter umfassend einen Wassersensor (20).

7. Kraftstofffilter nach einem der vorhergehenden Ansprüche, weiter umfassend einen Filterkopf (14), der an dem Deckel (4) mit dem Filtergehäuse (2) verbindbar ist.

8. Kraftstofffilter nach Anspruch 7, bei dem der Filterkopf (14) eine axiale rohrförmige Aufnahme (15) für das Führungsrohr (11) aufweist.

## Claims

1. Fuel filter (1), in particular for internal combustion engines of vehicles, comprising:
a filter housing (2) with a cover (4) and a housing pot (3), a filter element (5) disposed in the housing pot (3) with a water collecting chamber (9) formed in a bottom area (10) between the filter element (5) and the housing pot (3), as well as with a guide tube (11) exiting from the water collecting chamber (9) in which a water discharge tube (16) is disposed through which the water contained in the water collecting chamber (9) is discharged towards the upper side of the filter housing (2), **characterized in that** the guide tube (11) projects over the cover (4) of the filter housing (2).

2. Fuel filter according to claim 1, where the cover (4) features an outlet port (8) for the cleaned liquid and the guide tube (11) extends in axial direction through the outlet port (8).

3. Fuel filter according to claim 1 or 2, further comprising an attachment means (12), in particular a thread or a bayonet coupling, in the area of the cover (4) for connecting the filter housing (2) with a filter head (14).

4. Fuel filter according to one of the above claims, where the guide tube (11) features in the area projecting over the cover (4) on the shell side at least one discharge opening (18) for discharging the water.

5. Fuel filter according to one of the above claims, where a sealing (24) for sealing the water collecting chamber (9) is provided between the guide tube (11) and the filter element (5).

6. Fuel filter according to one of the above claims, further comprising a water sensor (20).

7. Fuel filter according to one of the above claims, further comprising a filter head (14) which can be connected at the cover (4) with the filter housing (2).

8. Fuel filter according to claim 7, where the filter head (14) features an axial tubular support (15) for the guide tube (11).

## Revendications

1. Filtre à carburant (1), notamment pour des moteurs à combustion interne de véhicules, comprenant :
un boîtier de filtre (2) avec un couvercle (4) et un pot de boîtier (3), avec un élément filtrant (5) placé dans le pot de boîtier (3) et doté d'un espace de collecte d'eau (9) formé dans une zone du sol (10) entre l'élément filtrant (5) et le pot de boîtier (3) ainsi qu'avec un tube de guidage (11) partant de l'espace de collecte d'eau (9) et dans lequel est disposé un tube d'écoulement d'eau (16) à travers lequel l'eau contenue dans l'espace de collecte d'eau (9) peut s'écouler vers le côté supérieur du boîtier de filtre (2), **caractérisé en ce que** le tube de guidage (11) dépasse du couvercle (4) du boîtier de filtre (2).

2. Filtre à carburant selon la revendication 1 dans lequel le couvercle (4) présente une ouverture de sortie (8) pour le liquide purifié et le tube de guidage (11) s'étend en sens axial à travers l'ouverture de sortie (8).

3. Filtre à carburant selon la revendication 1 ou 2, comprenant également un dispositif de fixation (12), notamment un filet ou un joint baïonnette, dans la zone du couvercle (4) afin de relier le boîtier de filtre (2) à une tête de filtre (14).

4. Filtre à carburant selon l'une des revendications précédentes, dans lequel le tube de guidage (11) présente dans la zone qui dépasse le couvercle (4), du côté de l'enveloppe, au moins une ouverture de sortie (18) pour faire écouler l'eau.

5. Filtre à carburant selon l'une des revendication précédentes, dans lequel un joint (24) destiné à étancher l'espace de collecte d'eau (9) est prévu entre le tube de guidage (11) et l'élément filtrant (5).

6. Filtre à carburant selon l'une des revendications précédentes, comprenant également un détecteur d'eau (20).

7. Filtre à carburant selon l'une des revendications précédentes, comprenant également une tête de filtre (14) qui peut être reliée au boîtier de filtre (2) sur le couvercle (4).

8. Filtre à carburant selon la revendication 7, dans lequel la tête de filtre (14) présente un logement tubulaire axial (15) pour le tube de guidage (11).
